# EUROPEAN PATENT APPLICATION

(11) **EP 4 509 250 A1**
(43) Date of publication of application: **19.02.2025**
(21) Application number: 22957439.7
(22) Date of filing: 01.09.2022
(51) Int. Cl.: B23B 31/117, B23B 19/02, B23B 21/00, B23B 31/20, B23B 31/26

(54) **DRAW TUBE DRIVE MECHANISM, SPINDLE UNIT, AND MACHINE TOOL**

(71) Applicant: Yamazaki Mazak Corporation, Niwa-gun, Aichi 480-0197 (JP)
(72) Inventor: SANO, Katsuki, Niwa-gun, Aichi 480-0197 (JP); EBOSHI, Koichi, Niwa-gun, Aichi 480-0197 (JP)
(74) Representative: TBK
(86) International application number: PCT/JP2022/032969
(87) International publication number: WO 2024/047844

(57) **Abstract**

A draw tube drive mechanism includes: a draw tube movable in a first direction substantially parallel to a first axis relative to a support member that supports a rotation member rotatably about the first axis; a drive device that moves the moving member in a second direction substantially perpendicular to the first direction; a first pin; a second pin; a third pin; a fourth pin; a first link connected to the moving member via the first pin; a second link connected to the first link via the second pin and connected to the support member via the fourth pin; and a third link connected to the first link via the third pin and configured to transmit a force received from the moving member via the first link to the draw tube. The first pin, second pin, and third pin are arranged substantially on a straight line when viewed from a direction along a third direction that is substantially perpendicular to both of the first direction and second direction. The distance between the first pin and the second pin and the distance between the second pin and the third pin are each substantially equal to the distance between the second pin and the fourth pin.

## Description

### Technical Field

The present invention relates to a draw tube drive mechanism, a spindle unit, and a machine tool.

### Background Art

Techniques for moving a draw tube for opening and closing a chuck or for other purposes are known.

As a related technique, Patent Literature 1 discloses a device for opening and closing a collet chuck on the headstock of an NC lathe. The collet chuck open/close device described in Patent Literature 1 includes a tube, a sleeve fixed to the tube, a clamper arranged on an outer circumferential surface of the sleeve, a substantially ring-like link, and a shifter provided in a center portion of the link and loosely fitted to the clamper. The collet chuck open/close device described in Patent Literature 1 can move the tube forward and backward by tilting the substantially ring-like link about a pin.

### Citation List

### Patent Literature

PTL1: JP 2006-110639A

### Summary of Invention

### Technical Problem

An object of the present invention is to provide a draw tube drive mechanism, a spindle unit, and a machine tool that can reduce generation of vibration, noise, and heat during the rotation of a rotation member.

### Solution to Problem

A draw tube drive mechanism according to some embodiments include: a draw tube movable in a first direction substantially parallel to a first axis relative to a support member configured to support a rotation member rotatably about the first axis; a drive device configured to move a moving member in a second direction substantially perpendicular to the first direction; a first pin; a second pin; a third pin; a fourth pin; a first link connected to the moving member via the first pin; a second link connected to the first link via the second pin and connected to the support member via the fourth pin; and a third link connected to the first link via the third pin and configured to receive a force from the moving member via the first link and to transmit the force to the draw tube. The first pin, the second pin, the third pin, and the fourth pin each extend along a third direction substantially perpendicular to both of the first direction and the second direction. The first pin, the second pin, and the third pin are arranged substantially on a straight line when viewed from a direction along the third direction. A distance between the first pin and the second pin and a distance between the second pin and the third pin are each substantially equal to a distance between the second pin and the fourth pin.

A spindle unit according to some embodiments include: a rotation member configured to hold a holding target; a support member configured to support the rotation member rotatably about a first axis; a rotary drive device configured to rotate the rotation member about the first axis; a draw tube movable in a first direction substantially parallel to the first axis relative to the support member; a drive device configured to move a moving member in a second direction substantially perpendicular to the first direction; a first pin; a second pin; a third pin; a fourth pin; a first link connected to the moving member via the first pin; a second link connected to the first link via the second pin and connected to the support member via the fourth pin; and a third link connected to the first link via the third pin and configured to receive a force from the moving member via the first link and to transmit the force to the draw tube. The first pin, the second pin, the third pin, and the fourth pin each extend along a third direction substantially perpendicular to both of the first direction and the second direction. The first pin, the second pin, and the third pin are arranged substantially on a straight line when viewed from a direction along the third direction. A distance between the first pin and the second pin and a distance between the second pin and the third pin are each substantially equal to a distance between the second pin and the fourth pin.

A machine tool according to some embodiments include: a workpiece holding device; a machining head configured to hold a tool; and a machining head drive device configured to move the machining head. The workpiece holding device includes: a rotation shaft configured to hold a workpiece; a support member configured to support the rotation shaft rotatably about a first axis; a rotary drive device configured to rotate the rotation shaft about the first axis; a draw tube movable in a first direction substantially parallel to the first axis relative to the support member; a drive device configured to move a moving member in a second direction substantially perpendicular to the first direction; a first pin; a second pin; a third pin; a fourth pin; a first link connected to the moving member via the first pin; a second link connected to the first link via the second pin and connected to the support member via the fourth pin; and a third link connected to the first link via the third pin and configured to receive a force from the moving member via the first link and to transmit the force to the draw tube. The first pin, the second pin, the third pin, and the fourth pin each extend along a third direction substantially perpendicular to both of the first direction and the second direction. The first pin, the second pin, and the third pin are arranged substantially on a straight line when viewed from a direction along the third direction. A distance between the first pin and the second pin and a distance between the second pin and the third pin are each substantially equal to a distance between the second pin and the fourth pin.

### Effects of the Invention

The present invention can provide a draw tube drive mechanism, a spindle unit, and a machine tool that can reduce generation of vibration, noise, and heat during the rotation of a rotation member.

### Brief Description of Drawings

[FIG. 1] FIG. 1 is a schematic cross-sectional view diagrammatically illustrating one part of a draw tube drive mechanism in a first embodiment.
[FIG. 2] FIG. 2 is a schematic cross-sectional view diagrammatically illustrating one part of a spindle unit in the first embodiment.
[FIG. 3] FIG. 3 is a schematic cross-sectional view diagrammatically illustrating one part of the spindle unit in the first embodiment.
[FIG. 4] FIG. 4 is a schematic front view diagrammatically illustrating one part of the draw tube drive mechanism in the first embodiment.
[FIG. 5] FIG. 5 is a schematic front view diagrammatically illustrating one part of the draw tube drive mechanism in the first embodiment.
[FIG. 6] FIG. 6 is a schematic rear view diagrammatically illustrating one part of the draw tube drive mechanism in the first embodiment.
[FIG. 7] FIG. 7 is a schematic front view diagrammatically illustrating the spindle unit in the first embodiment.
[FIG. 8] FIG. 8 is a schematic plan view diagrammatically illustrating the spindle unit in the first embodiment.
[FIG. 9] FIG. 9 is a schematic side view diagrammatically illustrating the spindle unit in the first embodiment.
[FIG. 10] FIG. 10 is a sectional view D-D of FIG. 1.
[FIG. 11] FIG. 11 is a schematic cross-sectional view diagrammatically illustrating one part of the draw tube drive mechanism in the first embodiment.
[FIG. 12] FIG. 12 is a schematic cross-sectional view diagrammatically illustrating one part of the draw tube drive mechanism in the first embodiment.
[FIG. 13] FIG. 13 is a schematic cross-sectional view diagrammatically illustrating one part of the draw tube drive mechanism in the first embodiment.
[FIG. 14] FIG. 14 is a schematic side view diagrammatically illustrating the spindle unit in the first embodiment.
[FIG. 15] FIG. 15 is a schematic side view diagrammatically illustrating the spindle unit in the first embodiment.
[FIG. 16] FIG. 16 is a schematic cross-sectional view diagrammatically illustrating one part of the spindle unit in a first modification of the first embodiment.
[FIG. 17] FIG. 17 is a schematic cross-sectional view diagrammatically illustrating one part of the spindle unit in the first modification of the first embodiment.
[FIG. 18] FIG. 18 is a schematic cross-sectional view diagrammatically illustrating one part of the spindle unit in a second modification of the first embodiment.
[FIG. 19] FIG. 19 is a schematic front view diagrammatically illustrating one part of the spindle unit in a third modification of the first embodiment.
[FIG. 20] FIG. 20 is a schematic front view diagrammatically illustrating a machine tool in a second embodiment.
[FIG. 21] FIG. 21 is a schematic side view diagrammatically illustrating the machine tool in the second embodiment.
[FIG. 22] FIG. 22 is a schematic plan view diagrammatically illustrating the machine tool in a modification of the second embodiment.

### Description of Embodiments

Hereinafter, a draw tube drive mechanism 1, a spindle unit 10, and a machine tool 100 in one embodiment will be described with reference to the drawings. In the following description of the embodiment, parts and components that have identical functions are given the same reference numerals, and repetitive descriptions of these parts and components with the same reference numerals will be omitted.

### (First Embodiment)

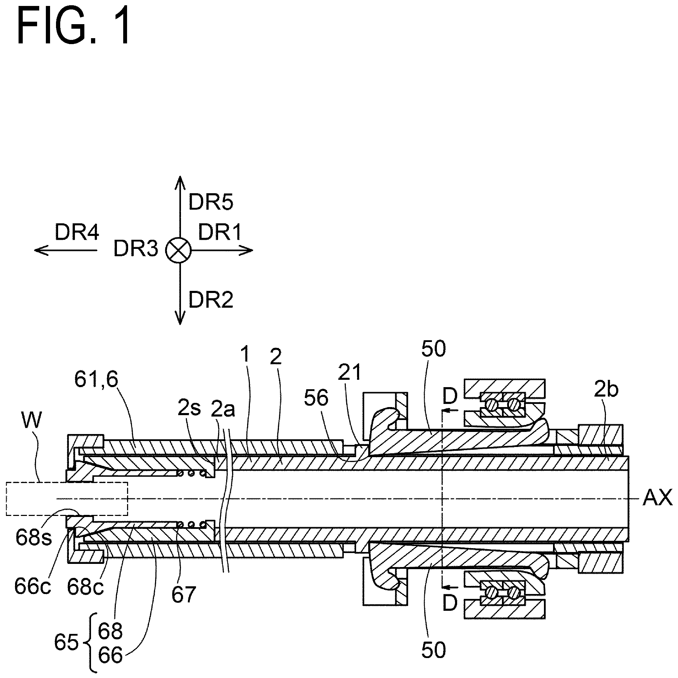

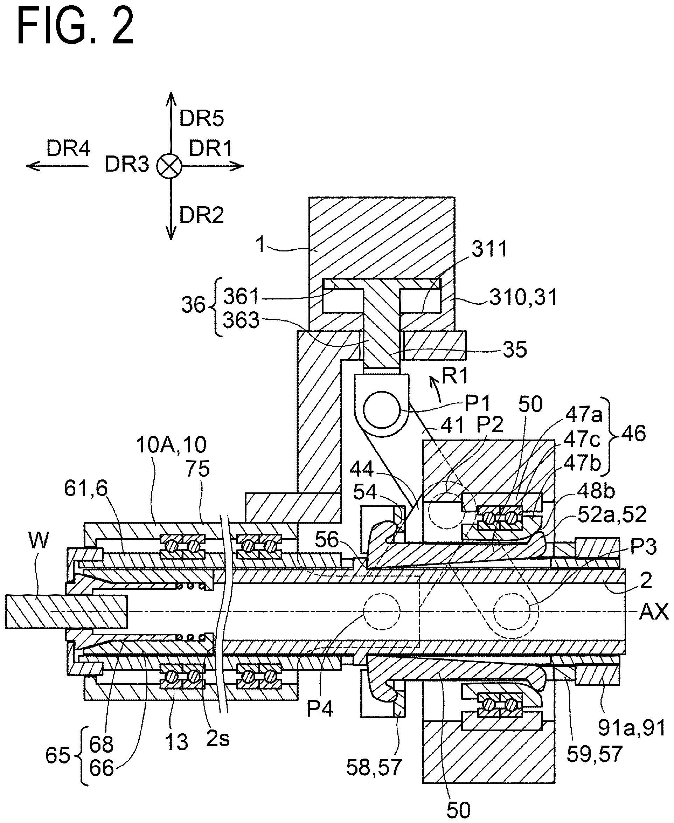

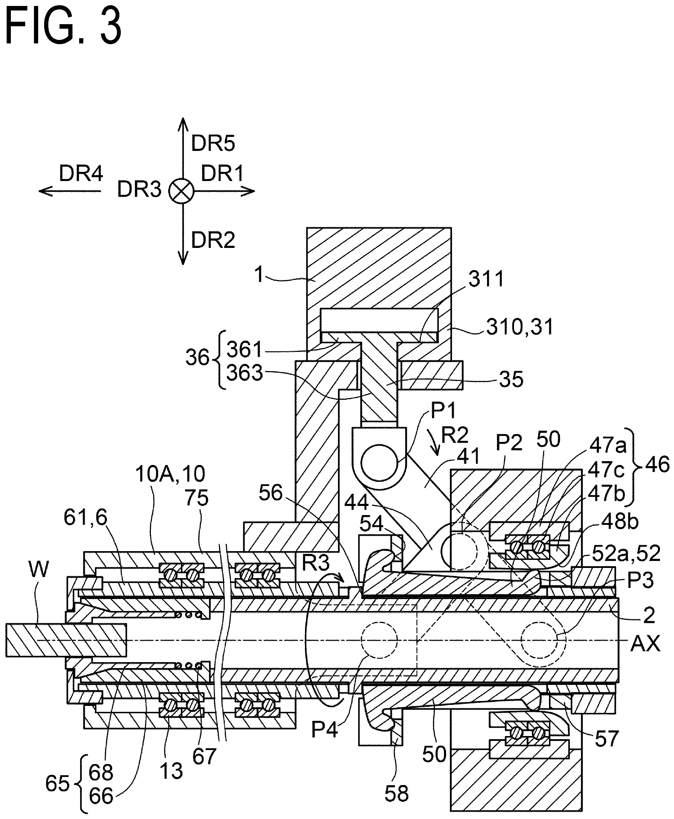

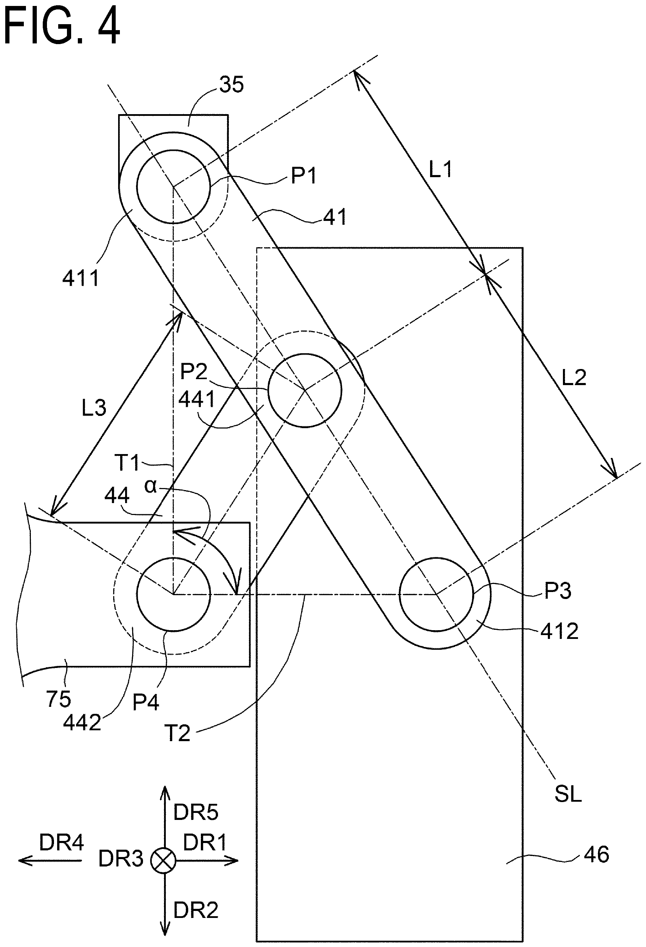

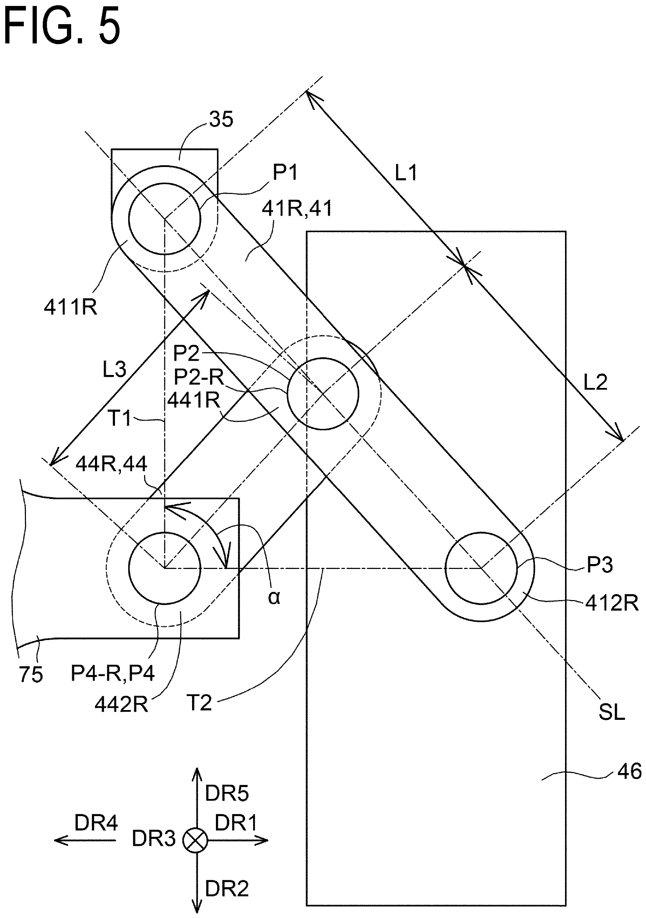

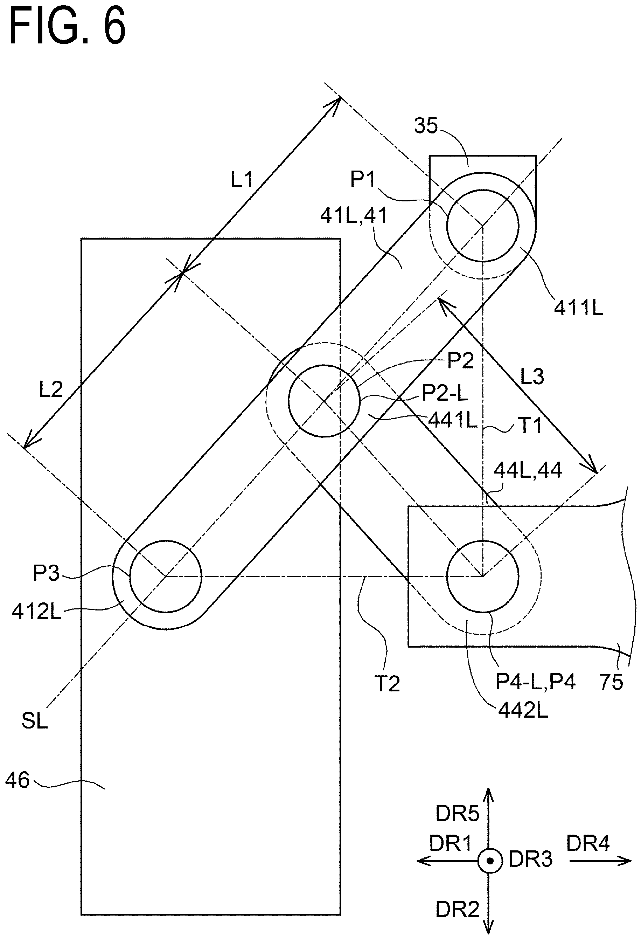

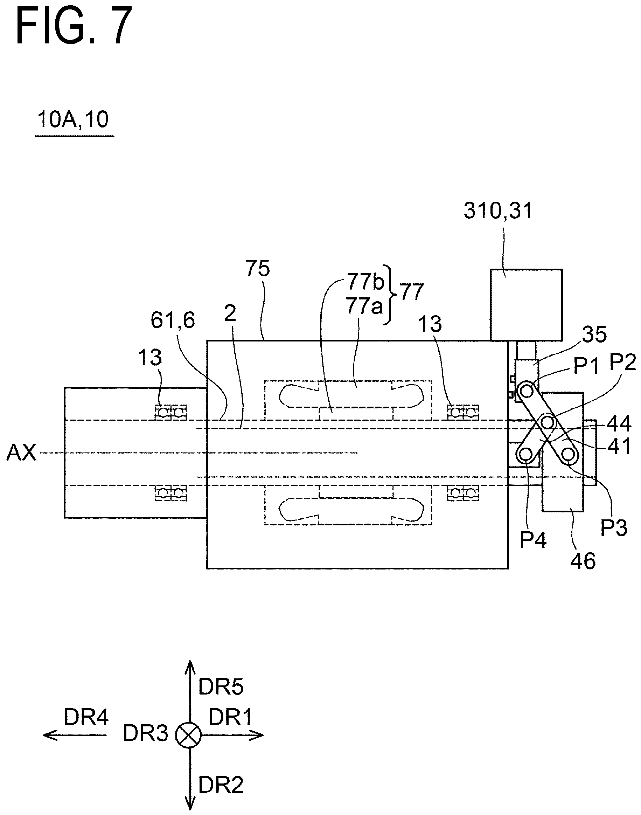

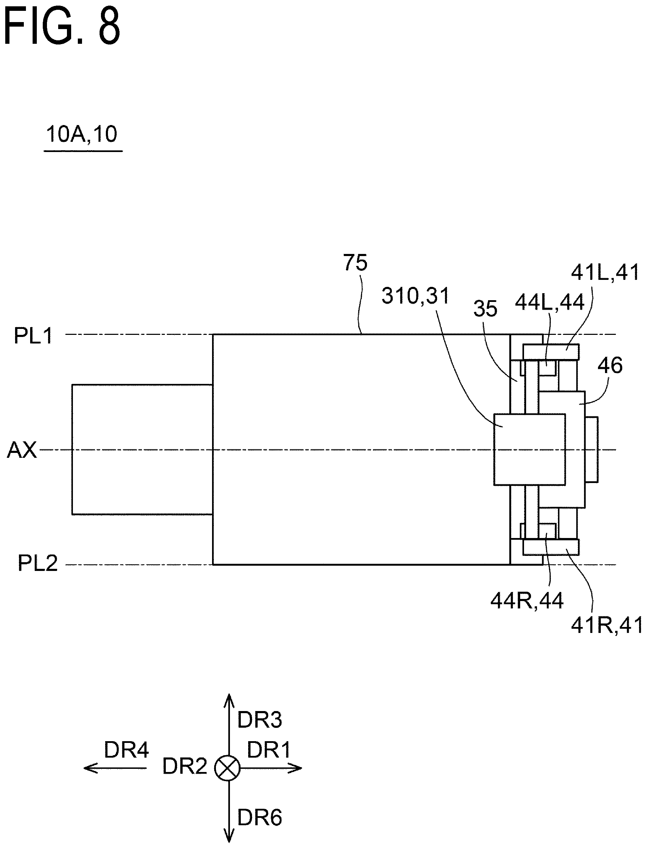

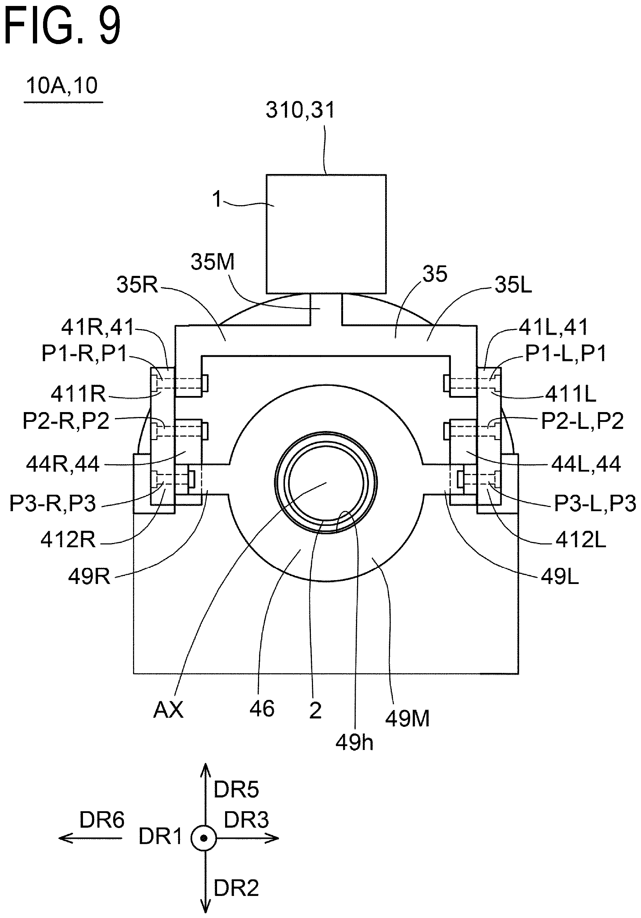

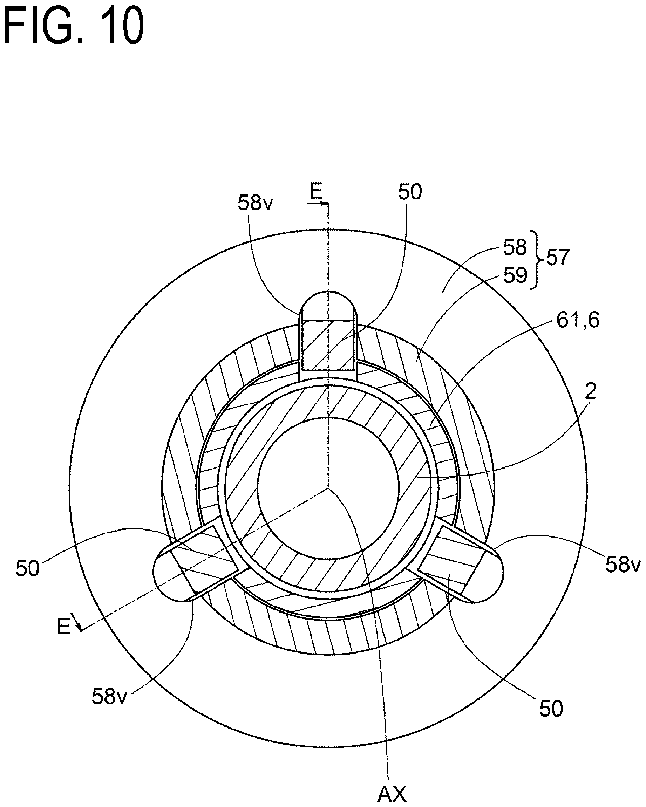

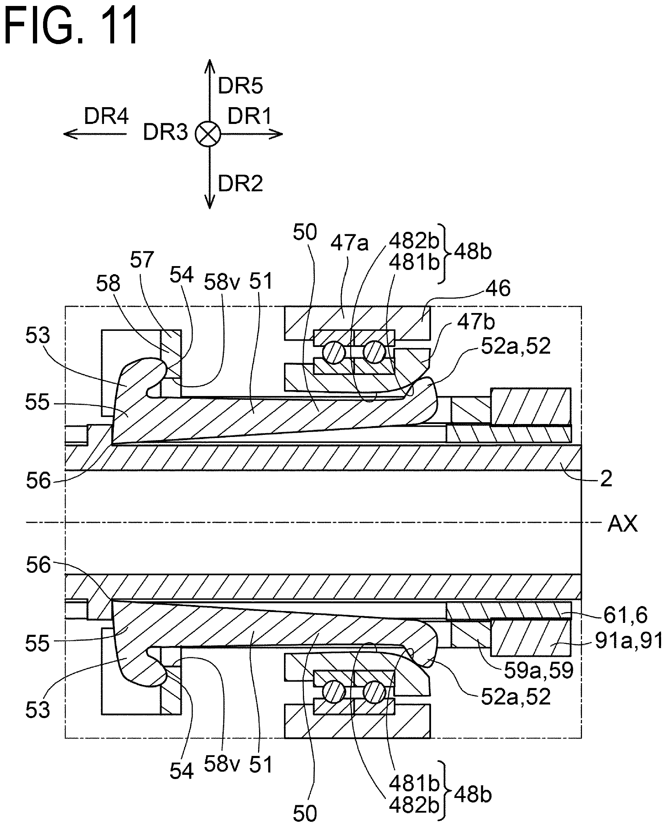

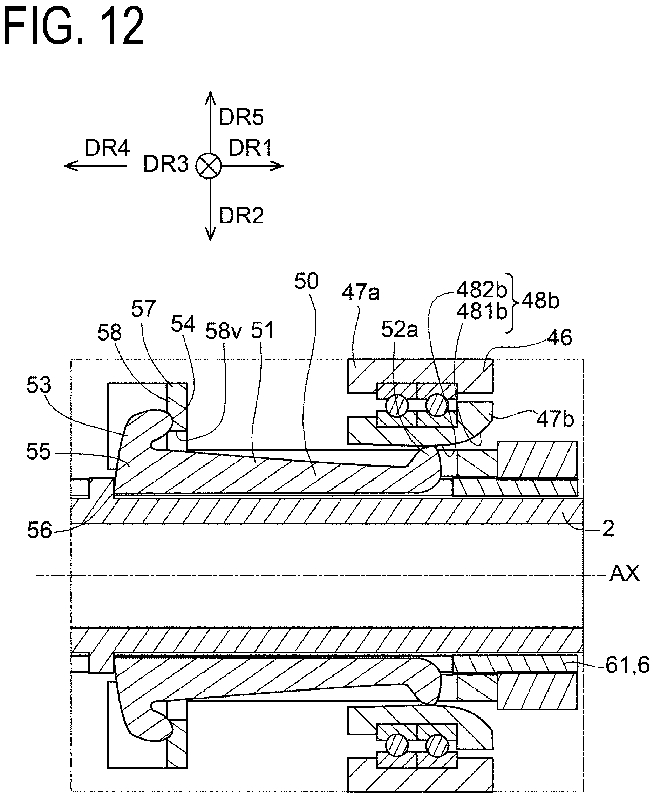

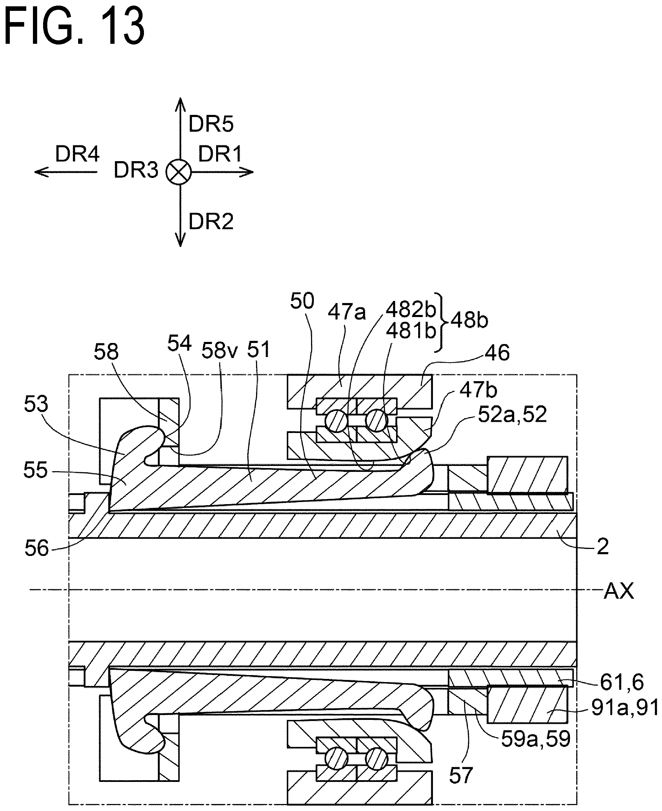

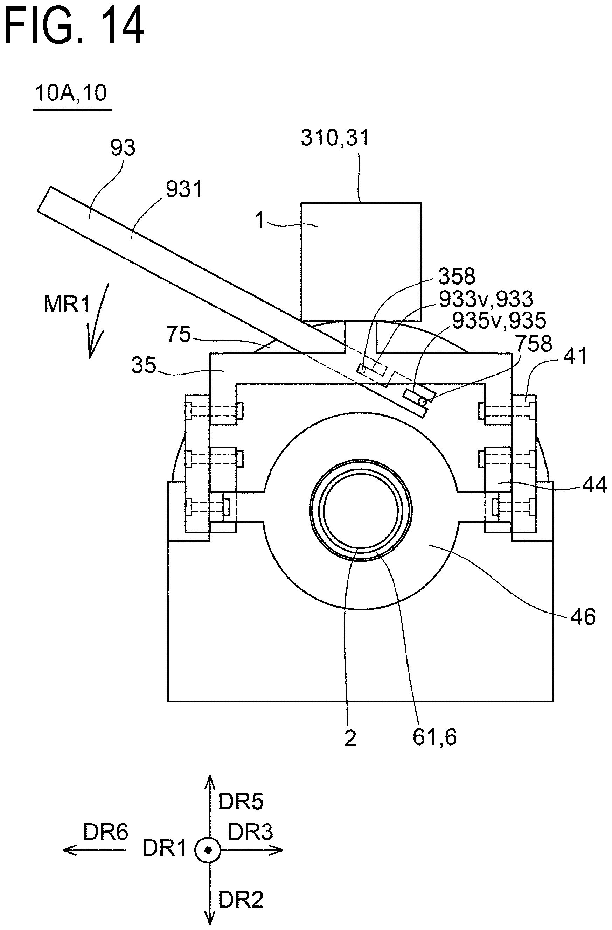

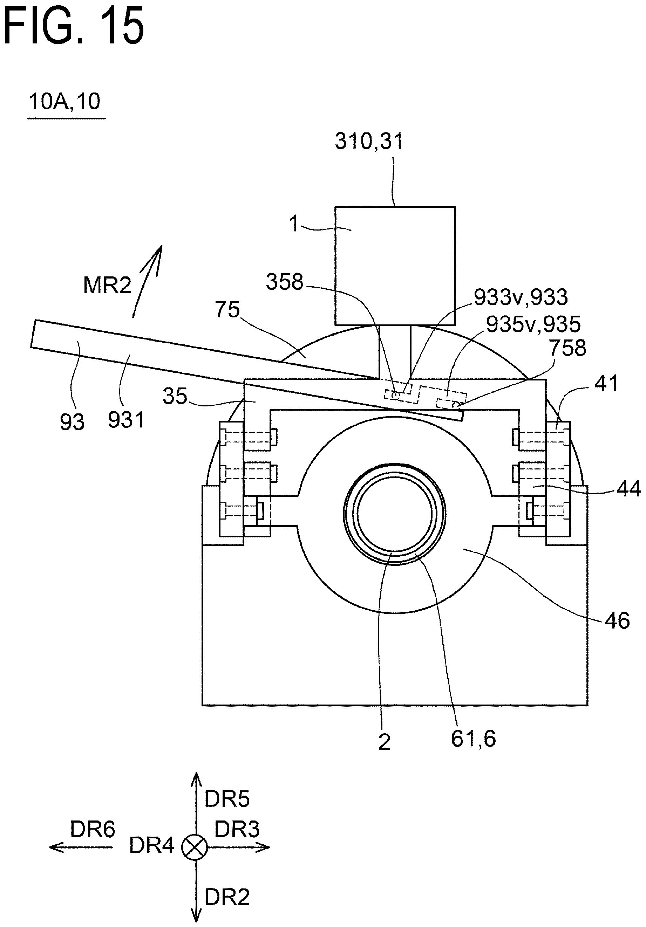

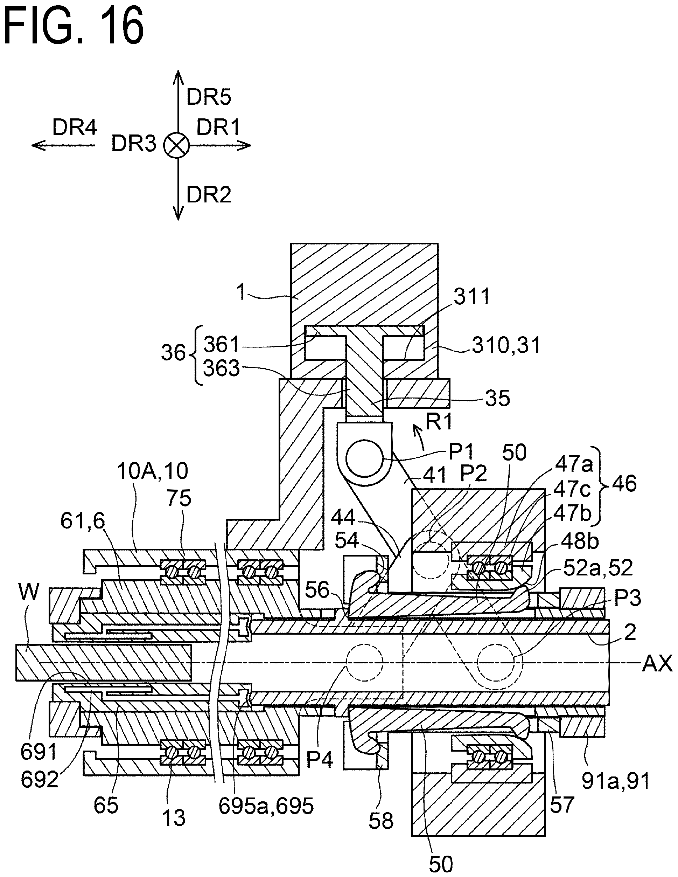

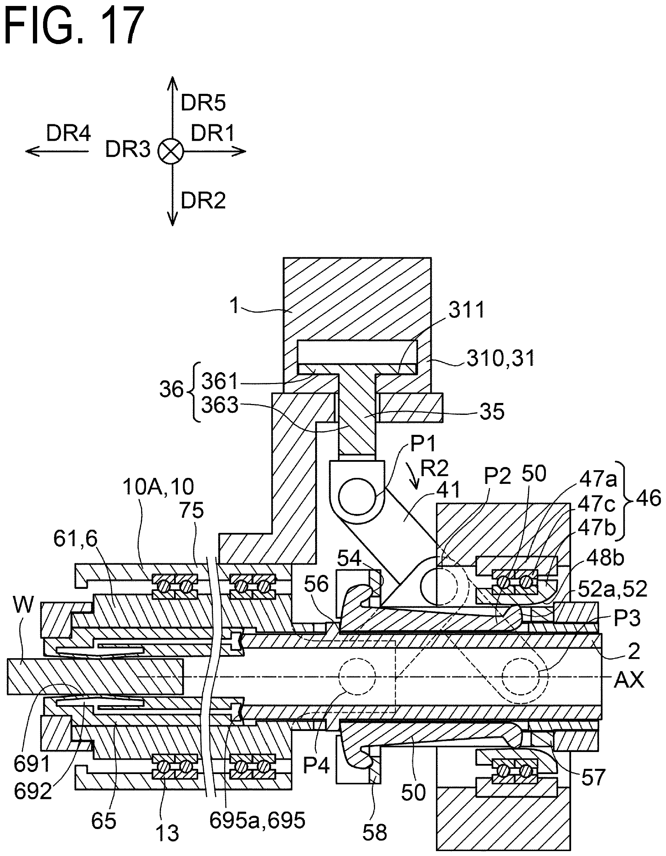

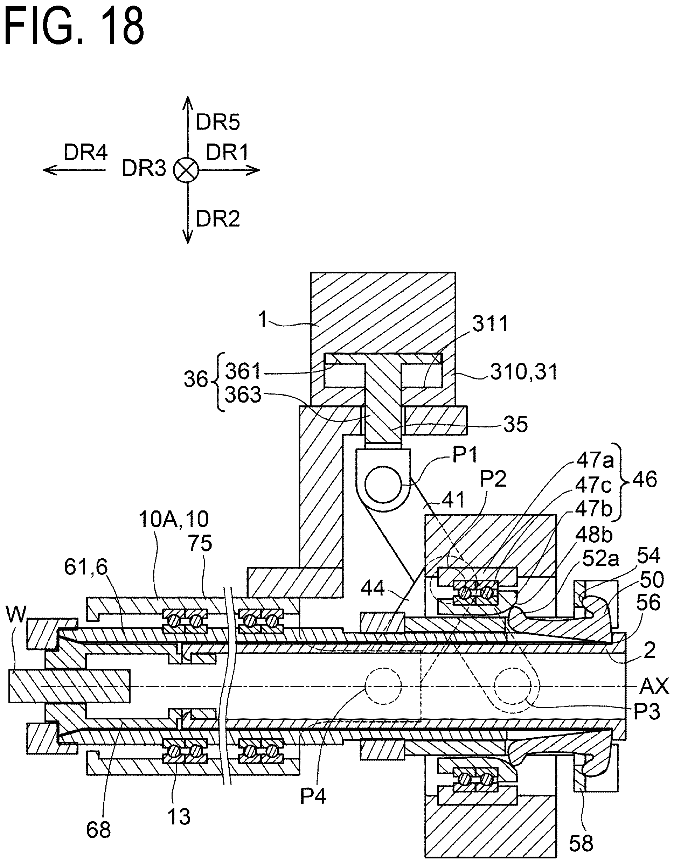

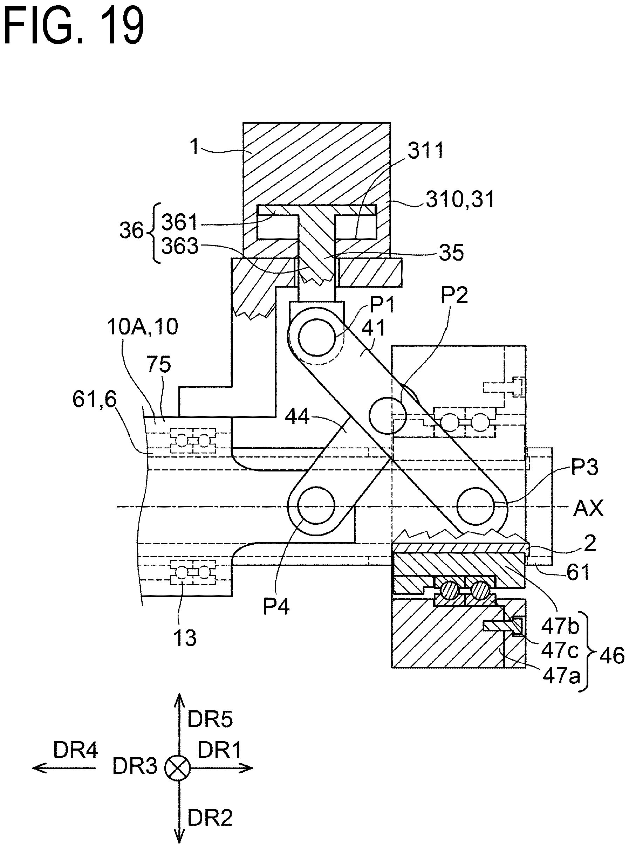

The draw tube drive mechanism 1 and spindle unit 10 according to a first embodiment will be described with reference to FIG. 1 to FIG. 19. FIG. 1 is a schematic cross-sectional view diagrammatically illustrating one part of the draw tube drive mechanism 1 in the first embodiment. FIG. 1 is a sectional view of a plane indicated by arrows E-E in FIG. 10. FIG. 2 and FIG. 3 are schematic cross-sectional views diagrammatically illustrating one part of the spindle unit 10 in the first embodiment. FIG. 4 and FIG. 5 are schematic front views diagrammatically illustrating one part of the draw tube drive mechanism 1 in the first embodiment. FIG. 6 is a schematic rear view diagrammatically illustrating one part of the draw tube drive mechanism 1 in the first embodiment. FIG. 7 is a schematic front view diagrammatically illustrating the spindle unit 10 in the first embodiment. FIG. 8 is a schematic plan view diagrammatically illustrating the spindle unit 10 in the first embodiment. FIG. 9 is a schematic side view diagrammatically illustrating the spindle unit 10 in the first embodiment. FIG. 10 is a sectional view D-D of FIG. 1. FIG. 11 to FIG. 13 are schematic cross-sectional views diagrammatically illustrating one part of the draw tube drive mechanism 1 in the first embodiment. FIG. 11 is an enlargement of one part of FIG. 1. FIG. 11 illustrates a state of a toggle 50 with its pressed portion 52a expanded, and FIG. 12 illustrates a state of the toggle 50 with its pressed portion 52a constricted. FIG. 13 illustrates how the position of a support sleeve 57 can be adjusted by an adjustment member 91. FIG. 14 and FIG. 15 are schematic side views diagrammatically illustrating the spindle unit 10 in the first embodiment. FIG. 14 illustrates a state before a moving member 35 is moved in a second direction DR2 by an operation lever 93, and FIG. 15 illustrates a state after the moving member 35 has been moved in the second direction DR2 by the operation lever 93. FIG. 16 and FIG. 17 are schematic cross-sectional views diagrammatically illustrating one part of the spindle unit 10 in a first modification of the first embodiment. FIG. 18 is a schematic cross-sectional view diagrammatically illustrating one part of the spindle unit 10 in a second modification of the first embodiment. FIG. 19 is a schematic front view diagrammatically illustrating one part of the spindle unit 10 in a third modification of the first embodiment. In FIG. 19, some parts of the spindle unit 10 are cut off to facilitate understanding of the internal structure of a third link 46 and the internal structure of a drive device 31.

As illustrated in FIG. 2, the draw tube drive mechanism 1 in the first embodiment includes a draw tube 2, a drive device 31, a first pin P1, a second pin P2, a third pin P3, a fourth pin P4, a first link 41, a second link 44, and a third link 46.

The draw tube 2 is movable in a first direction DR1 parallel to a first axis AX. More specifically, the draw tube 2 is movable in the first direction DR1 parallel to the first axis AX relative to a support member 75 that supports a rotation member 6 rotatably about the first axis AX.

It is to be noted that there can be production errors that occur during the production of components. Moreover, there is a clearance between two members that move relative to each other. Therefore, it should be understood that some errors are tolerated in the context herein. For example, the terms "parallel" and "perpendicular" as used herein encompass "substantially parallel" and "substantially perpendicular" respectively.

The drive device 31 moves the moving member 35 in a second direction DR2 perpendicular to the first direction DR1.

The first link 41 is connected to the moving member 35 via the first pin P1. The first link 41 is tiltable to the moving member 35 about the center axis of the first pin P1.

The second link 44 is connected to the first link 41 via the second pin P2. The second link 44 is also connected to the support member 75 via the fourth pin P4. The second link 44 is tiltable to the first link 41 about the center axis of the second pin P2. The second link 44 is also tiltable to the support member 75 about the center axis of the fourth pin P4.

The third link 46 is connected to the first link 41 via the third pin P3. The third link 46 receives a force from the moving member 35 via the first link 41 and transmits this force to the draw tube 2. The first link 41 is tiltable to the third link 46 about the center axis of the third pin P3.

In the example illustrated in FIG. 2, when the moving member 35 moves in the second direction DR2, the first link 41 tilts in a first rotation direction R1 about the center axis of the first pin P1, and the second link 44 tilts about the center axis of the fourth pin P4. When the first link 41 tilts in the first rotation direction R1 about the center axis of the first pin P1, the third link 46 moves in the first direction DR1 parallel to the first axis AX (see FIG. 3). On the other hand, in the example illustrated in FIG. 3, when the moving member 35 moves in a fifth direction DR5 opposite of the second direction DR2, the first link 41 tilts in a second rotation direction R2 about the center axis of the first pin P1, and the second link 44 tilts about the center axis of the fourth pin P4. When the first link 41 tilts in the second rotation direction R2 about the center axis of the first pin P1, the third link 46 moves in a fourth direction DR4 opposite of the first direction DR1 (see FIG. 2).

The mechanism of how the third link 46 moves in the first direction DR1 (or fourth direction DR4) is now described in more detail with reference to FIG. 4 and FIG. 5.

In the example illustrated in FIG. 4, the first pin P1, second pin P2, third pin P3, and fourth pin P4 each extend along a third direction DR3 perpendicular to both of the first direction DR1 and second direction DR2. The first pin P1, second pin P2, third pin P3, and fourth pin P4 are a plurality of pins arranged along the third direction DR3 and parallel to each other.

When viewed from a direction along the third direction DR3, the first pin P1, second pin P2, and third pin P3 are arranged on a straight line. In the example illustrated in FIG. 4, the first pin P1, second pin P2, and third pin P3 are arranged on a completely single straight line SL, when viewed from the direction along the third direction DR3. It should be noted that, even when the components are produced with the intention to arrange them on a straight line, there can be some displacement due to production errors or clearances between the pins and links. That is, in the first embodiment, the first pin P1, second pin P2, and third pin P3 need only be positioned substantially on a single straight line SL when viewed from the direction along the third direction DR3 in so far as to not hinder the smooth movements of the first link 41, second link 44, and third link 46.

In the example illustrated in FIG. 4, the first pin P1 is arranged at a first end 411 of the first link 41, and the third pin P3 is arranged at a second end 412 of the first link 41. The second pin P2 is arranged between the first pin P1 and the third pin P3.

In the example illustrated in FIG. 4, the second pin P2 is arranged at a first end 441 of the second link 44, and the fourth pin P4 is arranged at a second end 442 of the second link 44.

As illustrated in FIG. 4, the distance L1 between the first pin P1 and the second pin P2 (more specifically, the distance between the center axis of the first pin P1 and the center axis of the second pin P2) is equal to the distance L3 between the second pin P2 and the fourth pin P4 (more specifically, the distance between the center axis of the second pin P2 and the center axis of the fourth pin P4). It should be noted that, even when the components are produced with the intention to make the distance L1 and distance L3 equal, there can be some displacement due to production errors or clearances between the pins and links. That is, in the first embodiment, the distance L1 and the distance L3 need only be substantially equal in so far as to not hinder the smooth movements of the first link 41, second link 44, and third link 46.

As illustrated in FIG. 4, the distance L2 between the second pin P2 and the third pin P3 (more specifically, the distance between the center axis of the second pin P2 and the center axis of the third pin P3) is equal to the distance L3 between the second pin P2 and the fourth pin P4 (more specifically, the distance between the center axis of the second pin P2 and the center axis of the fourth pin P4). It should be noted that, even when the components are produced with the intention to make the distance L2 and distance L3 equal, there can be some displacement due to production errors or clearances between the pins and links. That is, in the first embodiment, the distance L2 and the distance L3 need only be substantially equal in so far as to not hinder the smooth movements of the first link 41, second link 44, and third link 46.

With the first pin P1, second pin P2, third pin P3, fourth pin P4, first link 41, second link 44, and third link 46 configured to satisfy the above-described geometric relationships, when the first pin P1 moves in the second direction DR2, the third pin P3 and third link 46 move in the first direction DR1 perpendicular to the second direction DR2 (see FIG. 5). With the first pin P1, second pin P2, third pin P3, fourth pin P4, first link 41, second link 44, and third link 46 configured to satisfy the above-described geometric relationships, when the first pin P1 moves in the fifth direction DR5, the third pin P3 and third link 46 move in the fourth direction DR4 perpendicular to the fifth direction DR5 (see FIG. 4).

More specifically, the triangle formed with the first pin P1, second pin P2, and fourth pin P4 as vertices is a first isosceles triangle T1 with the second pin P2 being the apex, irrespective of the positions of the first pin P1 and second pin P2. The triangle formed with the second pin P2, third pin P3, and fourth pin P4 as vertices is a second isosceles triangle T2 with the second pin P2 being the apex, irrespective of the positions of the second pin P2 and third pin P3. Moreover, the first pin P1, second pin P2, and third pin P3 are arranged on a straight line. Therefore, the sum α of one base angle of the first isosceles triangle T1 and one base angle of the second isosceles triangle T2 is always 90 degrees. Thus it is guaranteed that when the first pin P1 moves in the second direction DR2, the third pin P3 and third link 46 move in the first direction DR1 perpendicular to the second direction DR2. Likewise, it is guaranteed that when the first pin P1 moves in the fifth direction DR5, the third pin P3 and third link 46 move in the fourth direction DR4 perpendicular to the fifth direction DR5.

In the example illustrated in FIG. 4, when the first pin P1 moves in the second direction DR2, substantially no force acts from the third pin P3 to the third link 46, other than the force in the first direction DR1. When the first pin P1 moves in the second direction DR2, substantially no moment acts from the third pin P3 to the third link 46 to tilt the third link 46. Therefore, the third link 46 is prevented from tilting about the first axis AX. The above-described feature in the first embodiment reduces generation of vibration, noise, and heat resulting from tilting of the third link 46 during the rotation of the rotation member 6.

Moreover, according to the first embodiment, the movement of the moving member 35 in the second direction DR2 is converted into the movement of the third link 46 in the first direction DR1 as illustrated in FIG. 2 and FIG. 3, which provides a higher degree of freedom in arrangement of the drive device 31. Therefore, in the case where the installation space is limited, this facilitates placement of the entire draw tube drive mechanism 1 including the drive device 31 within the installation space.

Furthermore, according to the first embodiment, the movement of the third link 46 in the first direction DR1 is accomplished by the geometrical relationships between the plurality of pins (P1, P2, P3, and P4) and the plurality of links (41, 44, and 46). This means that, unless the clearances between the respective pins and links are excessive, the third link 46 exhibits little or no looseness.

Next, the spindle unit 10 according to the first embodiment will be described.

As illustrated in FIG. 7, the spindle unit 10 includes the rotation member 6, support member 75, a rotary drive device 77, the draw tube 2, drive device 31, first pin P1, second pin P2, third pin P3, fourth pin P4, first link 41, second link 44, and third link 46.

The draw tube 2, drive device 31, first pin P1, second pin P2, third pin P3, fourth pin P4, first link 41, second link 44, and third link 46 have already been described, and therefore repetitive descriptions of these elements will be omitted.

The rotation member 6 holds a holding target such as a workpiece. The support member 75 supports the rotation member 6 rotatably about the first axis AX. The rotary drive device 77 rotates the rotation member 6 about the first axis AX.

In the example illustrated in FIG. 7, the rotary drive device 77 includes a stator 77a disposed on the support member 75 and a rotor 77b disposed on the rotation member 6 (more specifically, on a rotation shaft 61). The rotary drive device 77 is a device that rotates the rotation member 6 by an electromagnetic effect. Alternatively, the rotary drive device 77 may be a device that rotates the rotation member 6 using a transmission member such as a belt.

Between the rotation member 6 (more specifically, the rotation shaft 61) and the support member 75 are disposed a plurality of bearings 13.

The spindle unit 10 according to the first embodiment includes the components and elements of the above-described draw tube drive mechanism 1, and therefore, the spindle unit 10 according to the first embodiment provides the same effects as those of the draw tube drive mechanism 1 according to the first embodiment.

### (Optional or Additional Configurations)

Next, some optional or additional configurations that may be adopted in the draw tube drive mechanism 1 and spindle unit 10 according to the first embodiment will be described with reference to FIG. 1 to FIG. 19.

### (Drive Device 31 and Moving Member 35)

In the example illustrated in FIG. 2, the drive device 31 is able to move the moving member 35 in the second direction DR2. In the example illustrated in FIG. 3, the drive device 31 is able to move the moving member 35 in the fifth direction DR5 opposite of the second direction DR2.

In the example illustrated in FIG. 2, the drive device 31 is a cylinder 310 that moves the moving member 35 in the second direction DR2 and/or the fifth direction DR5. The cylinder 310 may be an air cylinder, or may be a hydraulic cylinder. In the example illustrated in FIG. 2, the drive device 31 is configured with one cylinder 310. Alternatively, the drive device 31 may include a plurality of cylinders 310.

The drive device 31 (more specifically, the cylinder 310) is fixed to the support member 75 directly or indirectly. The drive device 31 should preferably be fixed to the support member 75 such as not to be movable relative to the support member 75.

In the example illustrated in FIG. 2, the moving member 35 is a piston 36 that is driven by the cylinder 310. The piston 36 includes a piston main body 361 disposed inside a cylinder chamber 311 of the cylinder 310, and a coupling member 363 that couples the piston main body 361 and the first pin P1.

The drive device 31 may be any type of device as long as it is able to move the moving member 35 in the second direction DR2 (and fifth direction DR5). The drive device 31 may include a motor. For example, the drive device 31 may include a motor, and a ball screw that is driven by this motor. The moving member 35 may include a nut that engages with the ball screw.

In the example illustrated in FIG. 2, the drive device 31 (more specifically, the cylinder 310) is disposed at a higher position than the draw tube 2. In this case, the drive device 31 does not interfere with the components arranged in the space below the draw tube 2. For example, in the case where there is provided a support member moving device that moves the support member 75 in a direction parallel to the horizontal plane, the drive device 31 does not interfere with this support member moving device.

In the example illustrated in FIG. 2, the drive device 31 (more specifically, the cylinder 310) is arranged vertically above the draw tube 2. With the drive device 31 arranged vertically above the draw tube 2, the draw tube drive mechanism 1 or the spindle unit 10 can be made compact in size in plan view.

In the example illustrated in FIG. 2, the second direction DR2 is parallel to the vertical direction. The second direction DR2 being parallel to the vertical direction means that the movement strokes of the moving member 35 are oriented parallel to the vertical direction. This enables the draw tube drive mechanism 1 or the spindle unit 10 to be made compact in size in the direction along the first axis AX.

As illustrated in FIG. 8, the direction opposite of the third direction DR3 is herein defined as a sixth direction DR6. The vertical plane passing one end in the third direction DR3 of the support member 75 and parallel to the first axis AX is defined as a first plane PL1, and the vertical plane passing one end in the sixth direction DR6 of the support member 75 and parallel to the first axis AX is defined as a second plane PL2. In the example illustrated in FIG. 8, the entire drive device 31 (more specifically, the entire cylinder 310) is arranged between the first plane PL1 and the second plane PL2. This enables the spindle unit 10 to be made compact in size in the direction along the third direction DR3.

In the example illustrated in FIG. 9, the moving member 35 (more specifically, the piston 36) includes a center portion 35M, a left arm 35L, and a right arm 35R. The left arm 35L extends to the left from the center portion 35M. The right arm 35R extends to the right from the center portion 35M. The term "left" herein means the left side of the first axis AX as viewed in plan and from the direction along the first direction DR1, and the term "right" herein means the right side of the first axis AX as viewed in plan and from the direction along the first direction DR1.

### (First Link 41)

In the example illustrated in FIG. 9, the first link 41 includes a left-side first link 41L and a right-side first link 41R. The first pin P1 includes a left-side first pin P1-L and a right-side first pin P1-R. The third pin P3 includes a left-side third pin P3-L and a right-side third pin P3-R.

The left-side first link 41L is arranged on the left side of the first axis AX as viewed in plan and from the direction along the first direction DR1. A first end 411L of the left-side first link 41L is connected to the left arm 35L via the left-side first pin P1-L such as to be rotatable relative to the left arm 35L. A second end 412L of the left-side first link 41L is connected to the third link 46 via the left-side third pin P3-L such as to be rotatable relative to the third link 46.

The right-side first link 41R is arranged on the right side of the first axis AX as viewed in plan and from the direction along the first direction DR1. A first end 411R of the right-side first link 41R is connected to the right arm 35R via the right-side first pin P1-R such as to be rotatable relative to the right arm 35R. A second end 412R of the right-side first link 41R is connected to the third link 46 via the right-side third pin P3-R such as to be rotatable relative to the third link 46.

### (Second Link 44)

In the example illustrated in FIG. 6, the second link 44 includes a left-side second link 44L. The second pin P2 includes a left-side second pin P2-L. The fourth pin P4 includes a left-side fourth pin P4-L.

The left-side second link 44L is arranged on the left side of the first axis AX as viewed in plan and from the direction along the first direction DR1. A first end 441L of the left-side second link 44L is connected to the left-side first link 41L via the left-side second pin P2-L such as to be rotatable relative to the left-side first link 41L. A second end 442L of the left-side second link 44L is connected to the support member 75 via the left-side fourth pin P4-L such as to be rotatable relative to the support member 75.

In the example illustrated in FIG. 5, the second link 44 includes a right-side second link 44R. The second pin P2 includes a right-side second pin P2-R. The fourth pin P4 includes a right-side fourth pin P4-R.

The right-side second link 44R is arranged on the right side of the first axis AX as viewed in plan and from the direction along the first direction DR1. A first end 441R of the right-side second link 44R is connected to the right-side first link 41R via the right-side second pin P2-R such as to be rotatable relative to the right-side first link 41R. A second end 442R of the right-side second link 44R is connected to the support member 75 via the right-side fourth pin P4-R such as to be rotatable relative to the support member 75.

### (Third Link 46)

In the example illustrated in FIG. 2, the third link 46 is configured as an assembly of a plurality of components. The third link 46 includes a first portion 47a, a second portion 47b, and a bearing 47c arranged between the first portion 47a and the second portion 47b.

The first portion 47a is connected to the first link 41 via the third pin P3.

The second portion 47b is supported by the first portion 47a rotatably about the first axis AX. The second portion 47b is an annular member disposed inside the first portion 47a. The bearing 47c is disposed between an inner circumferential surface of the first portion 47a and an outer circumferential surface of the second portion 47b.

In the example illustrated in FIG. 3, the second portion 47b rotates about the first axis AX with the rotation member 6 (more specifically, the rotation shaft 61). The draw tube 2 rotates about the first axis AX with the rotation member 6, more specifically, the rotation shaft 61 (see arrow R3 in FIG. 3). Further, the draw tube 2 is movable in the direction parallel to the first axis AX relative to the rotation member 6 (more specifically, the rotation shaft 61).

In the example illustrated in FIG. 2 and FIG. 3, when the third link 46 moves in the first direction DR1, substantially no force acts from the third pin P3 to the third link 46, other than the force in the first direction DR1. Substantially no moment acts either from the third pin P3 to the third link 46 to tilt the third link 46. The movement of the third link 46, which includes the first portion 47a, second portion 47b, and bearing 47c, in the first direction DR1 hardly causes the third link 46 to tilt relative to the first axis AX. Therefore, generation of vibration, noise, and heat resulting from tilting of the third link 46 is prevented, when the rotation member 6 rotates with the draw tube 2 and the second portion 47b of the third link 46 after the third link 46 has moved in the first direction DR1.

In the example illustrated in FIG. 3, the position of the center axis of the third pin P3 in the direction along the second direction DR2 is maintained during the rotation of the rotation member 6 by the geometrical relationships between the plurality of pins (P1, P2, P3, and P4) and the plurality of links (41, 44, and 46). This consequently prevents vibration of the third pin P3 and third link 46 in the direction along the second direction DR2. Moreover, the second portion 47b of the third link 46 rotating about the first axis AX creates a centering force in itself. These help to reduce generation of vibration, noise, and heat during the rotation of the rotation member 6 more effectively.

In the example illustrated in FIG. 3, the position of the center axis of the third pin P3 (more specifically, the height of the center axis of the third pin P3) in the direction along the second direction DR2 matches the position of the first axis AX (more specifically, the height of the first axis AX) in the direction along the second direction DR2.

In the example illustrated in FIG. 9, the third link 46 includes a left-side connecting portion 49L connected to the left-side first link 41L, a right-side connecting portion 49R connected to the right-side first link 41R, and a center portion 49M arranged between the left-side connecting portion 49L and the right-side connecting portion 49R. The center portion 49M has a ring-like shape. In other words, the center portion 49M has a through hole 49h. The draw tube 2 may be arranged to pass through this through hole 49h.

In the example illustrated in FIG. 9, the third link 46 couples the left-side first link 41L (more specifically, the second end 412L of the left-side first link 41L) and the right-side first link 41R (more specifically, the second end 412R of the right-side first link 41R). With the left-side first link 41L and right-side first link 41R coupled together via the third link 46, the tilting movements of the left-side first link 41L and right-side first link 41R are stabilized.

Additionally, the left-side first link 41L (more specifically, the first end 411L of the left-side first link 41L) and the right-side first link 41R (more specifically, the first end 411R of the right-side first link 41R) may be coupled together via another component (such as the moving member 35, for example) other than the third link 46. Alternatively, the left-side first link 41L and right-side first link 41R may be formed integrally. In these cases, the tilting movements of the left-side first link 41L and right-side first link 41R are further stabilized.

Also, the left-side second link 44L and right-side second link 44R may be coupled together via a coupling member. Alternatively, the left-side second link 44L and right-side second link 44R may be formed integrally. In these cases, the tilting movements of the left-side second link 44L and right-side second link 44R are stabilized.

### (Second Portion 47b, Toggle 50, and Support Sleeve 57)

In the example illustrated in FIG. 2, the draw tube drive mechanism 1 includes a toggle 50 that pivots on a fulcrum 54 when pressed by the second portion 47b of the third link 46, and a support sleeve 57 that supports the fulcrum 54 of the toggle 50. The toggle 50 includes a pressed portion 52a that is pressed by the second portion 47b of the third link 46, the fulcrum 54, and a load point 56. In the example illustrated in FIG. 2, the pressed portion 52a is formed by a protruded portion 52 that protrudes from an end portion of the toggle 50 in a direction away from the first axis AX.

In the example illustrated in FIG. 2, upon the second portion 47b of the third link 46 pressing the pressed portion 52a, the load point 56 presses the draw tube 2 in the fourth direction DR4 opposite of the first direction DR1.

More specifically, in the example illustrated in FIG. 2, when the drive device 31 (more specifically, the cylinder 310) moves the moving member 35 in the second direction DR2, the first link 41 connected to the moving member 35 moves the third link 46 in the first direction DR1. When the third link 46 moves in the first direction DR1, the second portion 47b of the third link 46 presses the pressed portion 52a of the toggle 50 in a direction toward the first axis AX. As a result, the pressed portion 52a moves in the direction toward the first axis AX (see FIG. 3). When the pressed portion 52a moves in the direction toward the first axis AX, the toggle 50 pivots about the fulcrum 54, and the load point 56 of the toggle 50 moves in the fourth direction DR4 opposite of the first direction DR1. The load point 56 moving in the fourth direction DR4 presses the draw tube 2 in the fourth direction DR4. Thus the draw tube 2 moves in the fourth direction DR4. In the example illustrated in FIG. 3, the draw tube 2 moving in the fourth direction DR4 causes a collet sleeve 66 to move in the fourth direction DR4 against the biasing force of a biasing member 67. As a result, the holding target such as a workpiece W is held by a collet 68.

In the example illustrated in FIG. 10, the draw tube drive mechanism 1 includes three toggles 50 arranged at circumferentially equidistant intervals about the first axis AX. It goes without saying that the number of toggles 50 equipped in the draw tube drive mechanism 1 is not limited to three.

In the example illustrated in FIG. 11, the second portion 47b of the third link 46 has a pressing surface 48b that presses the pressed portion 52a of the toggle 50. The pressing surface 48b may have a first pressing surface 481b that increases in inside diameter toward the first direction DR1 (in other words, a tapered pressing surface). The pressing surface 48b may have a second pressing surface 482b that maintains the pressed portion 52a of the toggle 50 in a constricted state. A constricted state shall mean a state in which the pressed portion 52a is relatively nearer to the first axis AX. An expanded state shall mean a state in which the pressed portion 52a is relatively spaced away from the first axis AX compared to the constricted state. In the example illustrated in FIG. 11, as the first pressing surface 481b moving in the first direction DR1 presses the pressed portion 52a, the pressed portion 52a moves closer to the first axis AX. As a result, the pressed portion 52a changes from the expanded state (see FIG. 11) to the constricted state (see FIG. 12).

In the example illustrated in FIG. 11, the toggle 50 includes a first arm 51 extending along the first axis AX, a second arm 53 extending in a direction away from the first axis AX, and a coupling portion 55 that couples the first arm 51 and the second arm 53.

The first arm 51 is arranged to pass through a groove 58v formed in a flange 58 of the support sleeve 57. The pressed portion 52a is positioned at the end of the first arm 51.

The fulcrum 54 is positioned on the second arm 53. The load point 56 is positioned on the coupling portion 55.

In the example illustrated in FIG. 11, the support sleeve 57 supports the fulcrum 54 of the toggle 50 such as to allow the toggle 50 to pivot about the fulcrum 54. The support sleeve 57 includes the flange 58 that supports the fulcrum 54 of the toggle 50 and a sleeve portion 59 extending along the first axis AX. In the example illustrated in FIG. 11, the support sleeve 57 (more specifically, the sleeve portion 59) has an end portion 59a that makes contact with an adjustment member 91.

### (Adjustment Member 91)

In the example illustrated in FIG. 13, the draw tube drive mechanism 1 includes the adjustment member 91 that adjusts the position of the support sleeve 57 relative to the rotation member 6 (more specifically, the rotation shaft 61) in the direction along the first axis AX. In the example illustrated in FIG. 13, the adjustment member 91 includes a nut 91a that engages with an end portion of the rotation member 6 (more specifically, an end portion on the side in the first direction DR1 of the rotation shaft 61).

In the example illustrated in FIG. 13, when the adjustment member 91 moves in the fourth direction DR4, the support sleeve 57, pressed by the adjustment member 91, moves in the fourth direction DR4. The support sleeve 57 moving in the fourth direction DR4 causes the entire toggle 50, pressed by the flange 58, to move in the fourth direction DR4.

In the example illustrated in FIG. 2, the holding force applied by the holding member 65 to the holding target can be tailored by adjusting the position of the support sleeve 57 in the direction along the first axis AX.

In the example illustrated in FIG. 2, with the third link 46 maintained in its position, the adjustment member 91 can adjust the position of the support sleeve 57 relative to the third link 46 in the direction along the first axis AX. After the position of the adjustment member 91 has been adjusted, the degree of the holding force applied by the holding member 65 to the holding target (for example, a workpiece W) can be checked by moving the moving member 35 in the second direction DR2. The moving member 35 should preferably be configured to be manually movable in the second direction DR2. This enables the operator to quickly check the degree of the holding force mentioned above.

### (Operation Lever 93)

In the example illustrated in FIG. 14, the draw tube drive mechanism 1 includes an operation lever 93 for operating the moving member 35. The operation lever 93 is able to cause the moving member 35 to move in the second direction DR2, and to move in the fifth direction DR5 opposite of the second direction DR2. The operation lever 93 is attachable to and detachable from both the moving member 35 and support member 75.

In the example illustrated in FIG. 14, the operation lever 93 includes an operation part 931 operated by the operator, a first engagement portion 933 engageable with the moving member 35, and a second engagement portion 935 engageable with the support member 75.

In the example illustrated in FIG. 14, the moving member 35 includes a first engagement protrusion 358, and the support member 75 includes a second engagement protrusion 758. The first engagement portion 933 of the operation lever 93 includes a first engagement groove 933v engageable with the first engagement protrusion 358, and the second engagement portion 935 includes a second engagement groove 935v engageable with the second engagement protrusion 758. In the example illustrated in FIG. 14, the second engagement protrusion 758 is arranged at a lower position than the first engagement protrusion 358, and farther in the third direction DR3 than the first engagement protrusion 358.

In the example illustrated in FIG. 14, the moving member 35 moves in the second direction DR2 when the operation part 931 is operated in a first operation direction MR1 about the second engagement protrusion 758, with the first engagement portion 933 engaged with the first engagement protrusion 358 and with the second engagement portion 935 engaged with the second engagement protrusion 758. Thus the draw tube 2 can be moved manually in the first direction DR1. In the example illustrated in FIG. 14, the first operation direction MR1 is downwards. This is easy for the operator to exert a force on the operation part 931. In particular, when the configuration is such that the holding force is applied to the holding target such as a workpiece W by moving the draw tube 2 in the first direction DR1, a relatively large force needs to be applied on the operation part 931. The first operation direction MR1 being downwards is easy for the operator to apply a relatively large force on the operation part 931.

In the example illustrated in FIG. 15, the moving member 35 moves in the fifth direction DR5 when the operation part 931 is operated in a second operation direction MR2 opposite of the first operation direction MR1 about the second engagement protrusion 758, with the first engagement portion 933 engaged with the first engagement protrusion 358 and with the second engagement portion 935 engaged with the second engagement protrusion 758. Thus the draw tube 2 can be moved manually in the fourth direction DR4. In the example illustrated in FIG. 15, the second operation direction MR2 is upwards.

### (Draw Tube 2)

The draw tube 2 is movable in the first direction DR1, as well as movable in the fourth direction DR4 opposite of the first direction DR1. In the example illustrated in FIG. 1, the draw tube 2 is disposed inside the rotation member 6 (more specifically, the rotation shaft 61). The draw tube 2 is coaxial with the rotation member 6 (more specifically, the rotation shaft 61).

In the example illustrated in FIG. 1, the distal end 2a and rear end 2b of the draw tube 2 are each disposed inside the rotation member 6 (more specifically, the rotation shaft 61). Apart of the draw tube 2 is surrounded by a plurality of toggles 50.

In the example illustrated in FIG. 1, the draw tube 2 moves in the fourth direction DR4 when the draw tube 2 is pressed by the load point 56 of the toggle 50 in the fourth direction DR4. On the other hand, in the example illustrated in FIG. 3, the draw tube 2 moves in the first direction DR1 by the biasing force of the biasing member 67 when the load point 56 of the toggle 50 moves in the first direction DR1.

As illustrated in FIG. 1, the draw tube 2 may include a flange 21 that is pressed by the load point 56 in the fourth direction DR4. The draw tube 2 may also include a pressing surface 2s that presses the holding member 65 (for example, the collet sleeve 66).

### (Rotation Member 6)

In the example illustrated in FIG. 2, the rotation member 6 of the spindle unit 10 is rotated about the first axis AX relative to the support member 75 by the drive force of the rotary drive device 77 (see FIG. 7 if necessary).

The rotation member 6 may include the rotation shaft 61 that is rotated about the first axis AX by the rotary drive device 77, and the holding member 65 disposed inside the rotation shaft 61. The rotation shaft 61 extends along the first axis AX. The holding member 65 holds a holding target such as a workpiece W.

The holding member 65 converts the pressing force received from the draw tube 2 (more specifically, the pressing surface 2s of the draw tube 2) into a holding force for holding the holding target such as a workpiece W.

In the example illustrated in FIG. 1, the holding member 65 is a collet chuck. The holding member 65 includes the collet sleeve 66 and the collet 68. Additionally, the holding member 65 may include the biasing member 67.

The collet sleeve 66 is pressed by the draw tube 2 in the fourth direction DR4. The collet 68 is disposed inside the collet sleeve 66.. The collet 68 includes a holding surface 68s that holds the holding target (for example, a workpiece W).

In the example illustrated in FIG. 1, the collet sleeve 66 moves in the fourth direction DR4 when the collet sleeve 66 is pressed by the draw tube 2 in the fourth direction DR4. The inner surface of the collet sleeve 66 includes a first slope 66c inclined towards the first axis AX in the first direction DR1, while the outer surface of the collet 68 includes a second slope 68c inclined towards the first axis AX in the first direction DR1. Therefore, when the collet sleeve 66 moves in the fourth direction DR4, the first slope 66c of the collet sleeve 66 presses the second slope 68c of the collet 68 in the direction towards the first axis AX. Thus the holding target such as a workpiece W set inside the collet 66 is held by the collet sleeve 66 via the collet 68.

In the example illustrated in FIG. 1, the rotation member 6 (more specifically, the holding member 65 of the rotation member 6) has the biasing member 67. The biasing member 67 biases the collet sleeve 66 in the first direction DR1. The biasing member 67 is a spring member, for example. In the example illustrated in FIG. 1, the biasing member 67 is disposed between the collet 68 and the collet sleeve 66.

In the example illustrated in FIG. 3, when the drive device 31 (more specifically, the cylinder 310) moves the moving member 35 in the fifth direction DR5 opposite of the second direction DR2, the first link 41 connected to the moving member 35 moves the third link 46 in the fourth direction DR4 opposite of the first direction DR1. When the third link 46 moves in the fourth direction DR4, the pressing surface 48b of the second portion 47b of the third link 46 moves in the direction away from the pressed portion 52a of the toggle 50, so that the pressed portion 52a moves in the direction away from the first axis AX. The pressed portion 52a moving in the direction away from the first axis AX causes the toggle 50 to pivot about the fulcrum 54, so that the load point 56 of the toggle 50 moves in the first direction DR1. When the load point 56 of the toggle 50 moves in the first direction DR1, the biasing force of the biasing member 67 causes the collet sleeve 66 and the draw tube 2 to move in the first direction DR1. Thus the holding target such as a workpiece W is released from the holding force from the collet 68.

### (First Modification of Holding Member 65)

In the example illustrated in FIG. 16, the holding member 65 is a hydraulic chuck. The holding member 65 includes a first diaphragm 691 that applies a holding force on the holding target (for example, a workpiece W), a liquid-filled space 692, and a pressed portion 695. The pressed portion 695 may be a second diaphragm 695a, or may be a piston.

In the example illustrated in FIG. 16, when the drive device 31 moves the moving member 35 in the second direction DR2, the third link 46 receives a force from the moving member 35 via the first link 41 and transmits the force to the draw tube 2. As a result, the draw tube 2 moves in the fourth direction DR4.

More specifically, when the drive device 31 (for example, the cylinder 310) moves the moving member 35 in the second direction DR2, the first link 41 connected to the moving member 35 moves the third link 46 in the first direction DR1. When the third link 46 moves in the first direction DR1, the pressing surface 48b of the third link 46 presses the pressed portion 52a of the toggle 50 in the direction toward the first axis AX. As a result, the pressed portion 52a moves in the direction toward the first axis AX (see FIG. 17). The pressed portion 52a moving in the direction toward the first axis AX causes the toggle 50 to pivot about the fulcrum 54, so that the load point 56 of the toggle 50 moves in the fourth direction DR4. The load point 56 moving in the fourth direction DR4 presses the draw tube 2 in the fourth direction DR4. Thus the draw tube 2 moves in the fourth direction DR4.

The draw tube 2 moving in the fourth direction DR4 presses the pressed portion 695 (for example, the second diaphragm 695a). When the pressed portion 695 (for example, the second diaphragm 695a) is pressed by the draw tube 2, the pressure inside the space 692 rises. This results in the first diaphragm 691 expanding towards the holding target, and the holding target is held by the first diaphragm 691.

In the example illustrated in FIG. 17, when the drive device 31 (more specifically, the cylinder 310) moves the moving member 35 in the fifth direction DR5 opposite of the second direction DR2, the first link 41 connected to the moving member 35 moves the third link 46 in the fourth direction DR4 opposite of the first direction DR1. When the third link 46 moves in the fourth direction DR4, the pressing surface 48b of the third link 46 moves in the direction away from the pressed portion 52a of the toggle 50, so that the pressed portion 52a moves in the direction away from the first axis AX. The pressed portion 52a moving in the direction away from the first axis AX causes the toggle 50 to pivot about the fulcrum 54, so that the load point 56 of the toggle 50 moves in the first direction DR1. The load point 56 of the toggle 50 moving in the first direction DR1 causes the first diaphragm 691 to return to its original shape. As a result, the holding target is released from the hold by the first diaphragm 691.

### (Moving Direction of Draw Tube 2)

In the example illustrated in FIG. 2 or in FIG. 16, when the third link 46 moves in the first direction DR1, the pressed portion 52a of the toggle 50 is pressed by the pressing surface 48b of the third link 46. As the pressed portion 52a is pressed by the pressing surface 48b, the load point 56 of the toggle 50 presses the draw tube 2 in the fourth direction DR4. As a result, the draw tube 2 moves in the fourth direction DR4.

Alternatively, as illustrated in FIG. 18, the draw tube 2 may be configured to move in the first direction DR1 when the third link 46 moves in the first direction DR1. In the example illustrated in FIG. 18, when the third link 46 moves in the first direction DR1, the pressed portion 52a of the toggle 50 is pressed by the pressing surface 48b of the third link 46. As the pressed portion 52a is pressed by the pressing surface 48b, the load point 56 of the toggle 50 presses the draw tube 2 in the first direction DR1. As a result, the draw tube 2 moves in the first direction DR1. The draw tube 2 moving in the first direction DR1 causes the holding member 65 to hold the holding target (for example, a workpiece W). More specifically, the draw tube 2 and collet 68 moving in the first direction DR1 cause the collet 68 to hold the holding target (for example, a workpiece W).

In the example illustrated in FIG. 2, FIG. 16, and FIG. 18, the third link 46 transmits a force to the draw tube 2 via the toggle 50. Alternatively, as illustrated in FIG. 19, the toggle 50 may be omitted.

In the example illustrated in FIG. 2, FIG. 16, FIG. 18, and FIG. 19, the holding target held by the holding member 65 is a workpiece W that is the machining target. Alternatively, the holding target held by the holding member 65 may be a tool (for example, a tool for machining a workpiece, or a measurement tool for measuring a given physical quantity).

### (Second Embodiment)

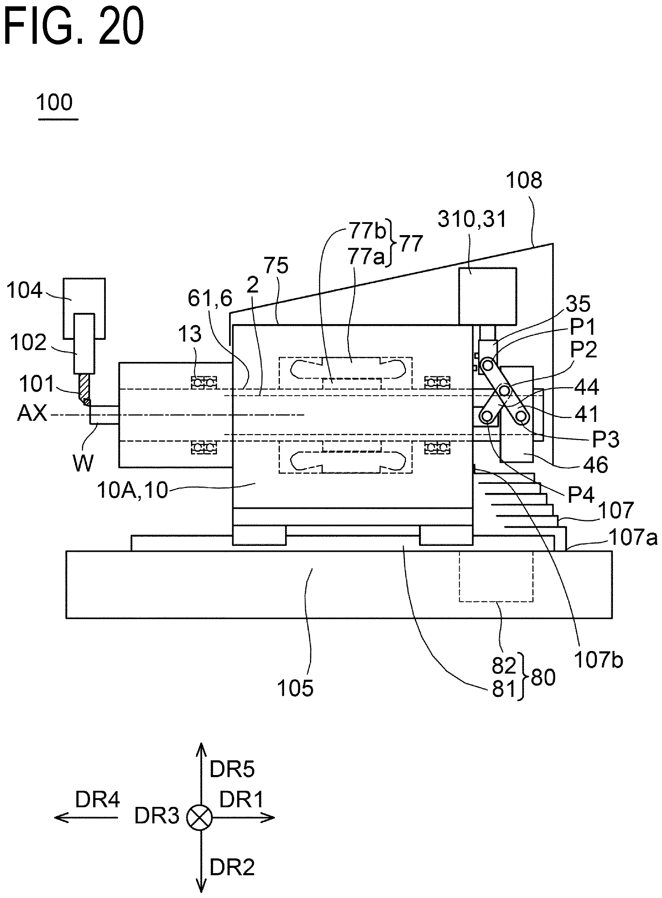

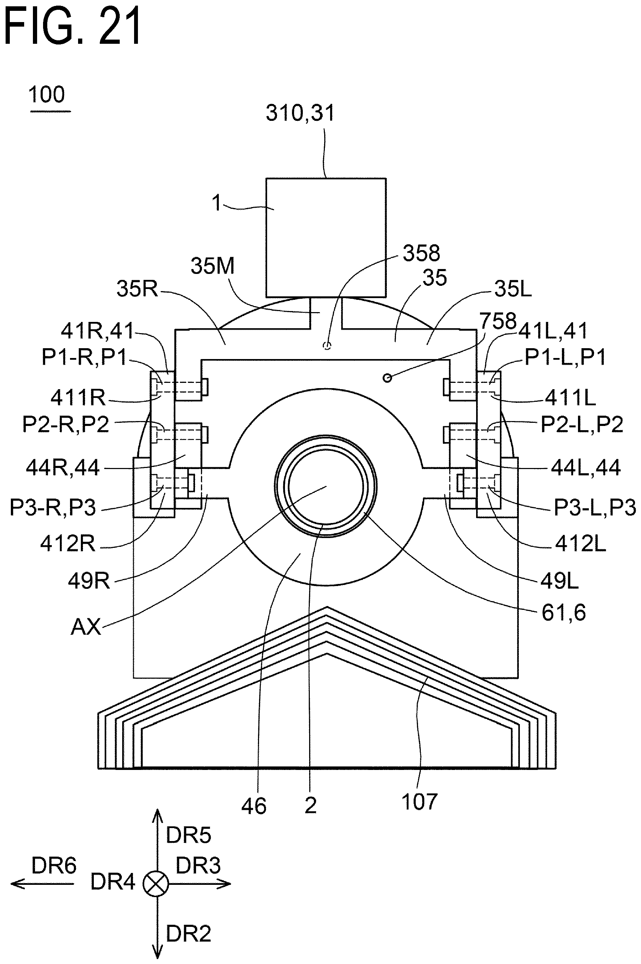

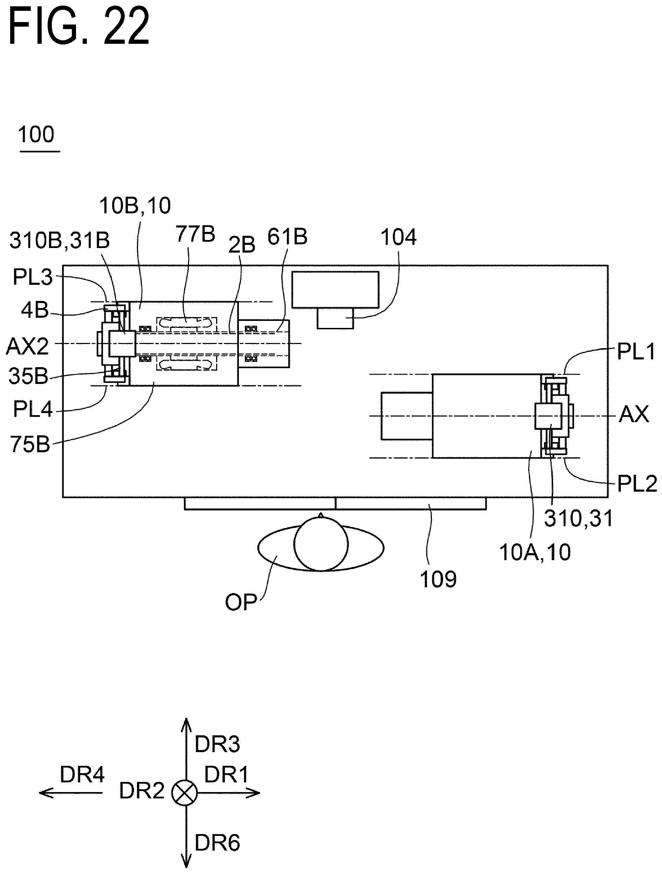

The machine tool 100 according to a second embodiment will be described with reference to FIG. 1 to FIG. 22. FIG. 20 is a schematic front view diagrammatically illustrating the machine tool 100 in the second embodiment. FIG. 21 is a schematic side view diagrammatically illustrating the machine tool 100 in the second embodiment. FIG. 22 is a schematic plan view diagrammatically illustrating the machine tool 100 in a modification of the second embodiment.

The description of the second embodiment will focus on the features different from the first embodiment. Repetitive descriptions of the matters that have already been described in the first embodiment will be omitted in the second embodiment. It goes without saying that these already described matters of the first embodiment are applicable to the second embodiment even though there is no explicit explanation thereof in the second embodiment.

As illustrated in FIG. 20, the machine tool 100 according to the second embodiment includes: a workpiece holding device 10A, a machining head 102 that holds a tool 101, and a machining head drive device 104 that moves the machining head 102. The machining head drive device 104 is able to move the machining head 102 in a direction towards the first axis AX (or in a direction away from the first axis AX). The machining head drive device 104 may be a device that is able to move the machining head 102 three-dimensionally.

The workpiece holding device 10A includes: (1) a rotation shaft 61 that holds a workpiece W; (2) a support member 75 that supports the rotation shaft 61 rotatably about a first axis AX; and (3) a rotary drive device 77 that rotates the rotation shaft 61 about the first axis AX.

As illustrated in FIG. 20, the workpiece holding device 10A includes: (4) a draw tube 2 movable in a first direction DR1 substantially parallel to the first axis AX relative to the support member 75; (5) a drive device 31 that moves a moving member 35 in a second direction DR2 substantially perpendicular to the first direction DR1; (6) a first pin P1; (7) a second pin P2; (8) a third pin P3; (9) a fourth pin P4; (10) a first link 41 connected to the moving member 35 via the first pin P1; (11) a second link 44 connected to the first link 41 via the second pin P2 and connected to the support member 75 via the fourth pin P4; and (12) a third link 46 that is connected to the first link 41 via the third pin P3 and that receives a force from the moving member 35 via the first link 41 and transmits the force to the draw tube 2. (13) The first pin P1, second pin P2, third pin P3, and fourth pin P4 each extend along a third direction DR3 substantially perpendicular to both of the first direction DR1 and the second direction DR2. (14) When viewed from a direction along the third direction DR3, the first pin P1, second pin P2, and third pin P3 are arranged substantially on a straight line. As illustrated in FIG. 4, (15) the distance L1 between the first pin P1 and the second pin P2 and the distance L2 between the second pin P2 and the third pin P3 are each substantially equal to the distance L3 between the second pin P2 and the fourth pin P4.

The rotation shaft 61, support member 75, rotary drive device 77, draw tube 2, drive device 31, first pin P1, second pin P2, third pin P3, fourth pin P4, first link 41, second link 44, and third link 46 have already been described in the first embodiment. Therefore, repetitive descriptions of these elements will be omitted.

The machine tool 100 according to the second embodiment provides the same effects as those of the draw tube drive mechanism 1 according to the first embodiment.

### (Optional or Additional Configurations)

Next, some optional or additional configurations that may be adopted in the machine tool 100 according to the second embodiment will be described with reference to FIG. 1 to FIG. 22.

### (Support Member Moving Device 80)

In the example illustrated in FIG. 20, the machine tool 100 includes a support member moving device 80. The support member moving device 80 moves the support member 75 in a direction parallel to the horizontal plane. The support member moving device 80 may include a guide rail 81 that guides the support member 75, and a motor 82 that moves the support member 75 along the guide rail 81.

### (Base 105 and Cover 107)

In the example illustrated in FIG. 20, the machine tool 100 includes a base 105, and a multi-tiered cover 107 (more specifically, a telescopic cover) that extends and contracts as the support member 75 moves. The base 105 supports the support member 75 via the guide rail 81. The cover 107 prevents chips and dust produced from the workpiece W from entering between the support member 75 and the base 105 that supports the support member 75. A first end 107a of the cover 107 is connected for example to the base 105 that supports the support member 75, and a second end 107b of the cover 107 is connected for example to the support member 75.

In the example illustrated in FIG. 20 and FIG. 21, the cover 107 is arranged vertically below the third link 46, and the drive device 31 is arranged above the third link 46. Therefore, the drive device 31 and the cover 107 do not interfere with each other. Moreover, with the drive device 31 arranged above the third link 46, it is easy to secure the space for placing the cover 107. In other words, the space below the third link 46 can be used to place the cover 107.

In the example illustrated in FIG. 20, the drive device 31, rotation shaft 61, and cover 107 are arranged on a straight line in front view. In the example illustrated in FIG. 21, the drive device 31, rotation shaft 61, draw tube 2, and cover 107 are arranged on a straight line in side view.

### (Second Cover 180)

As illustrated in FIG. 20, the machine tool 100 may include a second cover 180 that covers at least a part of the support member 75 and the entire drive device 31.

### (Door 109)

In the example illustrated in FIG. 22, the machine tool 100 includes a door 109 that allows the operator OP access to the workpiece holding device 10A. In the example illustrated in FIG. 22, the door 109 allows easy access for the operator OP to the workpiece holding device 10A.

More specifically, in the example illustrated in FIG. 21, the entire drive device 31 (more specifically, the entire cylinder 310) is arranged between the first plane PL1 and the second plane PL2, so that the workpiece holding device 10A can be positioned close to the door 109. As a result, the door 109 allows easy access for the operator OP to the workpiece holding device 10A.

In the example illustrated in FIG. 22, the machine tool 100 includes a second workpiece holding device 10B in addition to the workpiece holding device 10A. The second workpiece holding device 10B is positioned farther from the door 109 than the workpiece holding device 10A.

The second workpiece holding device 10B has the same configuration as the workpiece holding device 10A. For example, the second workpiece holding device 10B includes: (1) a second rotation shaft 61B that holds a second workpiece; (2) a second support member 75B that supports the second rotation shaft 61B rotatably about a second axis AX2 parallel to the first axis AX; (3) a second rotary drive device 77B that rotates the second rotation shaft 61B about the second axis AX2; (4) a second draw tube 2B movable in the first direction DR1 relative to the second support member 75B; and (5) a second drive device 31B (more specifically, a second cylinder 310B) that transmits a force to the second draw tube 2B via a plurality of links 4B by moving the second moving member 35B in the second direction DR2.

The vertical plane passing one end in the third direction DR3 of the second support member 75B and parallel to the second axis AX2 is herein defined as a third plane PL3, and the vertical plane passing one end in the sixth direction DR6 of the second support member 75B and parallel to the second axis AX2 is herein defined as a fourth plane PL4. In the example illustrated in FIG. 22, the entire second drive device 31B (more specifically, the entire second cylinder 310B) is arranged between the third plane PL3 and the fourth plane PL4. Therefore, the second workpiece holding device 10B is compact in size in the direction along the third direction DR3. This prevents the distance between the second workpiece holding device 10B and the door 109 from becoming too long. Therefore, the door 109 allows easy access for the operator OP to the second workpiece holding device 10B.

Obviously, the present invention is not limited to the various embodiments and modifications described above, and these embodiments or modifications thereof can be modified or changed as required within the scope of the technical concept of the present invention. Various techniques used in respective embodiments or modifications thereof may be applied to other embodiments or modifications as long as there are no technical contradictions. Optional or additional features in various embodiments and modifications can be omitted as suited.

### Reference Signs List

1 ... Draw tube drive mechanism, 2 ... Draw tube, 2B ... Second draw tube, 2a ... Distal end of draw tube, 2b ... Rear end of draw tube, 2s ... Pressing surface, 4B ... Link, 6 ... Rotation member, 10 ... Spindle unit, 10A ... Workpiece holding device, 10B ... Second workpiece holding device, 13 ... Bearing, 21 ... Flange, 31 ... Drive device, 31B ... Second drive device, 35 ... Moving member, 35B ... Second moving member, 35L ... Left arm, 35M ... Center portion of second moving member, 35R ... Right arm, 36 ... Piston, 41 ... First link, 41L ... Left-side first link, 41R ... Right-side first link, 44 ... Second link, 44L ... Left-side second link, 44R ... Right-side second link, 46 ... Third link, 47a ... First portion of third link, 47b ... Second portion of third link, 47c ... Bearing, 48b ... Pressing surface, 49L ... Left-side connecting portion, 49M ... Center portion of third link, 49R ... Right-side connecting portion, 49h ... Through hole, 50 ... Toggle, 51 ... First arm, 52 ... Protruded portion, 52a ... Pressed portion, 53 ... Second arm, 54 ... Fulcrum, 55 ... Coupling portion, 56 ... Load point, 57 ... Support sleeve, 58 ... Flange, 58v ... Groove, 59 ... Sleeve portion, 59a ... End portion of support sleeve, 61 ... Rotation shaft, 61B ... Second rotation shaft, 65 ... Holding member, 66 ... Collet sleeve, 66c ... First slope, 67 ... Biasing member, 68 ... Collet, 68c ... Second slope, 68s ... Holding surface, 75 ... Support member, 75B ... Second support member, 77 ... Rotary drive device, 77B ... Second rotary drive device, 77a ... Stator, 77b ... Rotor, 80 ... Support member moving device, 81 ... Guide rail, 82 ... Motor, 91 ... Adjustment member, 91a ... Nut, 93 ... Operation lever, 100 ... Machine tool, 101 ... Tool, 102 ... Machining head, 104 ... Machining head drive device, 105 ... Base, 107 ... Cover, 107a ... First end of cover, 107b ... Second end of cover, 108 ... Second cover, 109 ... Door, 310 ... Cylinder, 310B ... Second cylinder, 311 ... Cylinder chamber, 358 ... First engagement protrusion, 361 ... Piston main body, 363 ... Coupling member, 411, 411L, 411R ... First end of first link, 412, 412L, 412R ... Second end of first link, 441, 441L, 441R ... First end of second link, 442, 442L, 442R ... Second end of second link, 481b ... First pressing surface, 482b ... Second pressing surface, 691 ... First diaphragm, 692 ... Liquid-filled space, 695 ... Pressed portion, 695a ... Second diaphragm, 758 ... Second engagement protrusion, 931 ... Operation part, 933 ... First engagement portion, 933v ... First engagement groove, 935 ... Second engagement portion, 935v ... Second engagement groove, AX ... First axis, AX2 ... Second axis, OP ... Operator, P1 ... First pin, P1-L ... Left-side first pin, P1-R ... Right-side first pin, P2 ... Second pin, P2-L ... Left-side second pin, P2-R ... Right-side second pin, P3 ... Third pin, P3-L ... Left-side third pin, P3-R ... Right-side third pin, P4 ... Fourth pin, P4-L... Left-side fourth pin, P4-R ... Right-side fourth pin, W ... Workpiece

## Claims

1. A draw tube drive mechanism comprising:
a draw tube movable in a first direction substantially parallel to a first axis relative to a support member configured to support a rotation member rotatably about the first axis;
a drive device configured to move a moving member in a second direction substantially perpendicular to the first direction;
a first pin;
a second pin;
a third pin;
a fourth pin;
a first link connected to the moving member via the first pin;
a second link connected to the first link via the second pin and connected to the support member via the fourth pin; and
a third link connected to the first link via the third pin and configured to receive a force from the moving member via the first link and to transmit the force to the draw tube,
wherein the first pin, the second pin, the third pin, and the fourth pin each extend along a third direction substantially perpendicular to both of the first direction and the second direction,
wherein the first pin, the second pin, and the third pin are arranged substantially on a straight line when viewed from a direction along the third direction, and
wherein a distance between the first pin and the second pin and a distance between the second pin and the third pin are each substantially equal to a distance between the second pin and the fourth pin.

2. The draw tube drive mechanism according to claim 1,
wherein the third link comprises
a first portion connected to the first link via the third pin,
a second portion supported by the first portion rotatably about the first axis and configured to rotate with the rotation member, and
a bearing disposed between the first portion and the second portion, and
wherein the draw tube is configured to rotate about the first axis with the rotation member and to be movable in a direction parallel to the first axis relative to the rotation member.

3. The draw tube drive mechanism according to claim 2, further comprising a toggle configured to pivot about a fulcrum by being pressed by the second portion,
wherein the toggle comprises
a pressed portion pressed by the second portion,
the fulcrum, and
a load point configured to press the draw tube in the first direction or a fourth direction opposite of the first direction, upon the pressed portion being pressed.

4. The draw tube drive mechanism according to any one of claims 1 to 3, wherein the first link comprises
a left-side first link arranged on a left side of the first axis as viewed in plan and as viewed from a direction along the first direction, and
a right-side first link arranged on a right side of the first axis as viewed in plan and as viewed from a direction along the first direction, and
wherein the left-side first link and the right-side first link are coupled together via the third link.

5. The draw tube drive mechanism according to claim 4,
wherein the third link comprises
a left-side connecting portion connected to the left-side first link,
a right-side connecting portion connected to the right-side first link, and
a center portion disposed between the left-side connecting portion and the right-side connecting portion, and
wherein a through hole is formed in the center portion for the draw tube to pass through.

6. The draw tube drive mechanism according to any one of claims 1 to 5,
wherein the drive device is disposed at a higher position than the draw tube, and
wherein the second direction is substantially parallel to a vertical direction.

7. The draw tube drive mechanism according to any one of claims 1 to 6, further comprising an operation lever configured to move the moving member in the second direction,
wherein the operation lever is attachable to and detachable from both the moving member and the support member.

8. A spindle unit comprising:
a rotation member configured to hold a holding target;
a support member configured to support the rotation member rotatably about a first axis;
a rotary drive device configured to rotate the rotation member about the first axis;
a draw tube movable in a first direction substantially parallel to the first axis relative to the support member;
a drive device configured to move a moving member in a second direction substantially perpendicular to the first direction;
a first pin;
a second pin;
a third pin;
a fourth pin;
a first link connected to the moving member via the first pin;
a second link connected to the first link via the second pin and connected to the support member via the fourth pin; and
a third link connected to the first link via the third pin and configured to receive a force from the moving member via the first link and to transmit the force to the draw tube,
wherein the first pin, the second pin, the third pin, and the fourth pin each extend along a third direction substantially perpendicular to both of the first direction and the second direction,
wherein the first pin, the second pin, and the third pin are arranged substantially on a straight line when viewed from a direction along the third direction, and
wherein a distance between the first pin and the second pin and a distance between the second pin and the third pin are each substantially equal to a distance between the second pin and the fourth pin.

9. The spindle unit according to claim 8,
wherein the rotation member comprises
a rotation shaft, and
a holding member disposed inside the rotation shaft and configured to hold the holding target, and
wherein the holding member converts a pressing force received from the draw tube into a holding force for holding the holding target.

10. The spindle unit according to claim 9,
wherein the holding member includes one of a collet chuck and a hydraulic chuck.

11. The spindle unit according to claim 9 or 10,
wherein the drive device is entirely disposed between a first plane and a second plane, the first plane being defined as a vertical plane passing one end in the third direction of the support member and parallel to the first axis, and the second plane being defined as a vertical plane passing one end in a sixth direction, defined as being opposite of the third direction, of the support member and parallel to the first axis.

12. A machine tool comprising:
a workpiece holding device;
a machining head configured to hold a tool; and
a machining head drive device configured to move the machining head,
wherein the workpiece holding device comprises
a rotation shaft configured to hold a workpiece,
a support member configured to support the rotation shaft rotatably about a first axis,
a rotary drive device configured to rotate the rotation shaft about the first axis, a draw tube movable in a first direction substantially parallel to the first axis relative to the support member,
a drive device configured to move a moving member in a second direction substantially perpendicular to the first direction,
a first pin,
a second pin,
a third pin,
a fourth pin,
a first link connected to the moving member via the first pin,
a second link connected to the first link via the second pin and connected to the support member via the fourth pin, and
a third link connected to the first link via the third pin and configured to receive a force from the moving member via the first link and to transmit the force to the draw tube,
wherein the first pin, the second pin, the third pin, and the fourth pin each extend along a third direction substantially perpendicular to both of the first direction and the second direction,
wherein the first pin, the second pin, and the third pin are arranged substantially on a straight line when viewed from a direction along the third direction, and
wherein a distance between the first pin and the second pin and a distance between the second pin and the third pin are each substantially equal to a distance between the second pin and the fourth pin.

13. The machine tool according to claim 12, further comprising a support member moving device configured to move the support member,
a base configured to support the support member, and
a cover configured to extend and contract as the support member moves,
wherein the cover is arranged vertically below the third link, and
wherein the drive device is arranged above the third link.
